# EUROPEAN PATENT APPLICATION

(11) **EP 1 041 826 A1**
(43) Date of publication of application: **04.10.2000**
(21) Application number: 99302627.7
(22) Date of filing: 01.04.1999
(51) Int. Cl.: H04N 7/30, H04N 7/50

(54) **Apparatus for coding data and apparatus for decoding block transform coefficients**

(71) Applicant: LUCENT TECHNOLOGIES INC., Murray Hill, New Jersey 07974-0636 (US)
(72) Inventor: Eryurtlu, Faruk Mehmet, Swindon, Wiltshire SN2 3FW (GB)
(74) Representative: Williams, David John

(57) **Abstract**

There is disclosed apparatus for encoding blocks of data organised in frames. Order finding means provides for a block in the current frame, an order of words from a corresponding block in the previous frame. The order groups zero value words in the previous frame block together. Coding means run length encodes words in, or derived from, the block in the current frame and places them in the order provided from the previous block.

## Description

This invention relates to apparatus for coding data and to apparatus for decoding data.

Existing video compression standards are all based on block discrete cosine transform. The picture is divided into square blocks consisting of 8x8 pixels. The blocks may contain the actual picture pixels or the prediction residual, which is the difference between the actual and motion compensated bock pixels. Next, each block is transformed into the discrete cosine transform domain, which results in 8x8 coefficients. Those coefficients are then quantised.

After quantisation, the aim is to use minimum number of bits to represent the quantised coefficients. For this purpose, the standards employ first 1D run length coding and then variable length coding. However, before run length coding, the 2D coefficients have to be mapped into 1D domain. In other words, they have to be scanned in a particular order.

The scanning order affects the efficiency of variable length encoding. In order to achieve higher coding efficiency, the non-zero coefficients need to be separated from the zero coefficients. For instance, let us assume that N out of 64 coefficients are non-zero. The mapping process would best place those N coefficients before the zero coefficients in the 1D order. This way, the encoder would need to use run length codes with low run values, which can be encoded using shorter variable length encoding codes. In addition, the encoder could send an end-of-block *code after N coefficients to indicate that the remaining coefficients are zero and therefore they do not need to be encoded. On the other hand, if the non-zero coefficients cannot be grouped together, then more bits will be needed to encode the resulting run length codes.

The existing video coding standards employ zig-zag scanning order shown below.

| | | | | | | | |
|---|---|---|---|---|---|---|---|
| 1 | 2 | 6 | 7 | 15 | 16 | 28 | 29 |
| 3 | 5 | 8 | 14 | 17 | 27 | 30 | 43 |
| 4 | 9 | 13 | 18 | 26 | 31 | 42 | 44 |
| 10 | 12 | 19 | 25 | 32 | 41 | 45 | 54 |
| 11 | 20 | 24 | 33 | 40 | 46 | 53 | 55 |
| 21 | 23 | 34 | 39 | 47 | 52 | 56 | 61 |
| 22 | 35 | 38 | 48 | 51 | 57 | 60 | 62 |
| 36 | 37 | 49 | 50 | 58 | 59 | 63 | 64 |

This order is based on the fact that the probability of a coefficient being non-zero is higher towards to the top-left corner, which corresponds to the lowest horizontal and vertical frequencies. Obviously, this ordering does not change depending on the circumstances, therefore it is not adaptive.

Furthermore, H.263+ and MPEG employ some degree of adaptivity for INTRA blocks, for which motion compensation is not used, and therefore they include the actual pixels. In this mode, the scanning order may be slightly modified as illustrated in the following figures. When mapping, one of the 3 possible orders giving the higher efficiency is selected.

| | | | | | | | |
|---|---|---|---|---|---|---|---|
| 1 | 2 | 3 | 4 | 11 | 12 | 13 | 14 |
| 5 | 6 | 9 | 10 | 18 | 17 | 16 | 15 |
| 7 | 8 | 20 | 19 | 27 | 28 | 29 | 30 |
| 21 | 22 | 25 | 26 | 31 | 32 | 33 | 34 |
| 23 | 24 | 35 | 36 | 43 | 44 | 45 | 46 |
| 37 | 38 | 41 | 42 | 47 | 48 | 49 | 50 |
| 39 | 40 | 51 | 52 | 57 | 58 | 59 | 60 |
| 53 | 54 | 55 | 56 | 61 | 62 | 63 | 64 |
| Alternate horizontal scan | | | | | | | |

| | | | | | | | |
|---|---|---|---|---|---|---|---|
| 1 | 5 | 7 | 21 | 23 | 37 | 39 | 53 |
| 2 | 6 | 8 | 22 | 24 | 38 | 40 | 54 |
| 3 | 9 | 20 | 25 | 35 | 41 | 51 | 55 |
| 4 | 10 | 19 | 26 | 36 | 42 | 52 | 56 |
| 11 | 18 | 27 | 31 | 43 | 47 | 57 | 61 |
| 12 | 17 | 28 | 32 | 44 | 48 | 58 | 62 |
| 13 | 16 | 29 | 33 | 45 | 49 | 59 | 63 |
| 14 | 15 | 30 | 34 | 46 | 50 | 60 | 64 |
| Alternate vertical scan | | | | | | | |

This choice is available only for INTRA blocks, and a separate code needs to be used to inform the decoder about the selected order.

Against this background, in accordance with the invention there is provided apparatus for encoding blocks of data organised in frames, comprising: order finding means to provide for a block in the current frame, an order of words from a corresponding block in the previous frame, which order groups zero value words in the previous frame block together; and coding means to run length encode words in, or derived from, the block in the current frame and place them in the order provided from the previous block.

The order is preferably in order of descending value.

The coding means is preferably arranged to identify the corresponding block in the previous frame by reference to a motion information vector, to provide a prediction residual, to discrete cosine transform the prediction residual and to then run length encode the transformed prediction residual.

The order finding means is preferably arranged to discrete cosine transform the block from the previous frame and to find the order from the transform coefficients.

The invention also extends to apparatus for decoding data encoded by the coding apparatus of the invention, comprising order finding means for providing an order of words for a block in the current frame, from the decoded corresponding block in the previous frame, which order groups zero value words of the decoded block in the previous frame together; and decoding means to decode words in the current block, and to place them in a position in the decoded block determined from the order provided from the previous block.

The invention has particular application for INTER blocks, which correspond to the difference between the actual and motion compensated blocks. (When a block can be predicted from the previous frame, INTER mode is used for that particular block.)

In this application, the apparatus processes the previous frame block used in motion compensation in order to estimate the best scanning order. Since that block is very similar to the current block being encoded, the distribution of transform coefficients is also similar in both blocks. However, the block to be mapped into 1D, does not include the actual transform coefficients, but the transform coefficients corresponding to the difference between those 2 blocks. Experimental data show that there is still some relation between the transform coefficients of the difference block and the block used for motion compensation.

In order to estimate the positions of the non-zero (and therefore zero) transform coefficients in the difference block, the magnitudes of the transform coefficients corresponding to the block used in motion compensation are used. After this estimation, the scan order can be determined by covering the non-zero coefficients first.

The benefits of this invention include not only more adaptive scanning order, which improves the coding efficiency, but also applicability to INTER blocks, which are much more frequent than INTRA blocks. In addition, there is no need to send a separate code to inform the decoder about the scanning order since the decoder can do the same process and find the order itself.

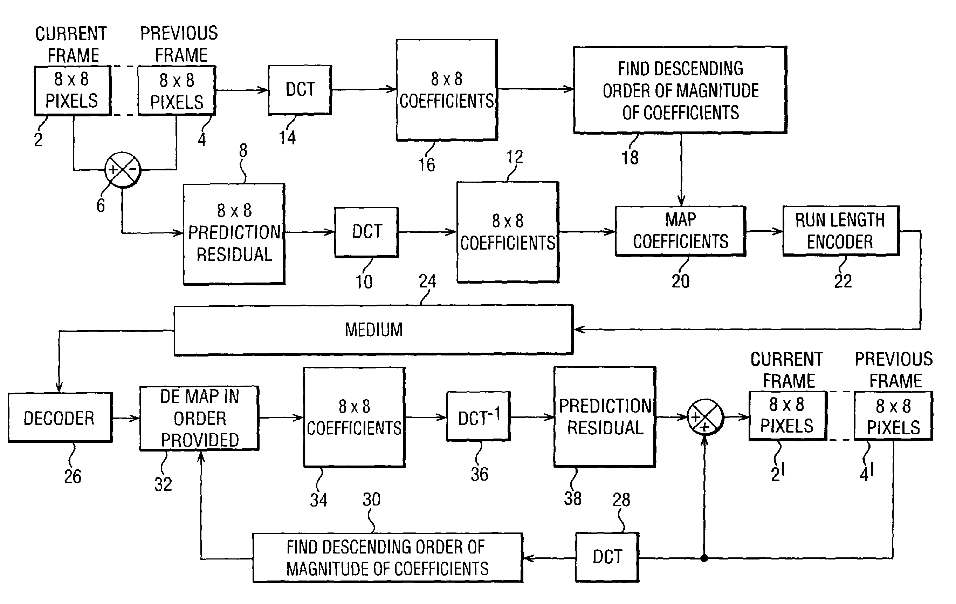

One embodiment of the invention will now be described, by way of example, with reference to the accompanying drawing which is a block diagram showing a data transmission system having a coder and a decoder both embodying the invention.

Square 8x8 pixel blocks are coded in sequence. Block 2 is a block in the frame currently being coded: the current frame. Block 4 is the corresponding block in the frame previously encoded: the previous frame and is identified using the motion information vector. At 6 the blocks 2 and 4 are processed to compensate for motion. The block 2 values are subtracted from the motion compensated values to provide a prediction residual block 8. The prediction residual is discrete cosine transformed at 10 to provide 8x8 transform coefficients 12.

The discrete cosine transform coefficients of the corresponding block 4 in the previous frame block are also calculated at 14 to produce a block of transform coefficients 16. The coefficients are set to zero if their absolute values are lower than a certain threshold, which can be set equal to the quantisation step size, to produce the block of coefficients . At 18 an order is found for the coefficients descending from the largest absolute value. If more than one coefficient has the same absolute value than zig-zag scan is used to order those coefficients. Mapper 20 then uses this order for mapping the discrete cosine transform coefficients of the difference block which are the run length encoded by coder 22 in accordance with the probability of the particular code occurring, and transmitted through a medium 24.

The transmitted coded blocks are decoded by a decoder 26. When the coded block corresponding to the current block 2 is received, the corresponding block 4' from the decoded demapped block previously decoded is discrete cosine transformed at 28. At 30 an order is found for the coefficients descending from the largest absolute value. If more than one coefficient has the same absolute value than zig-zag scan is used to order those coefficients. Demapper 32 then uses this order for demapping the block of coefficients into a block 34 in their original order. At 36, the reordered block 34 is then transformed back to regain a block 38 of prediction residuals. This is then summed with the block 4' to reconstruct a block 2' corresponding to the original current block 2.

## Claims

1. Apparatus for encoding blocks of data organised in frames, comprising: order finding means to provide for a block in the current frame, an order of words from a corresponding block in the previous frame, which order groups zero value words in the previous frame block together; and coding means to run length encode words in, or derived from, the block in the current frame and place them in the order provided from the previous block.

2. Apparatus as claimed in claim 1, wherein the order is in order of descending value.

3. Apparatus as claimed in claim 1 or 2, wherein the coding means is arranged to identify the corresponding block in the previous frame by reference to a motion information vector, to provide a prediction residual, to discrete cosine transform the prediction residual and to then run length encode the transformed prediction residual.

4. Apparatus as claimed in claim 3, wherein the order finding means is arranged to discrete cosine transform the block from the previous frame and to find the order from the transform coefficients.

5. Apparatus for decoding data encoded by the apparatus of any preceding claim, comprising order finding means for providing an order of words for a block in the current frame, from the decoded corresponding block in the previous frame, which order groups zero value words of the decoded block in the previous frame together; and decoding means to decode words in the current block, and to place them in a position in the decoded block determined from the order provided from the previous block.
